# EUROPEAN PATENT APPLICATION

(11) **EP 3 910 596 A1**
(43) Date of publication of application: **17.11.2021**
(21) Application number: 20173930.7
(22) Date of filing: 11.05.2020
(51) Int. Cl.: G06T 9/00, H04N 1/41, H04N 19/21

(54) **METHOD FOR COMPRESSING AND DELIVERY OF AN IMAGE FILE**

(71) Applicant: SeenThis AB, 120 32 Stockholm (SE)
(72) Inventor: Andersson, Einar, 132 35 SALTSJÖ-BOO (SE)
(74) Representative: Groth & Co. KB

(57) **Abstract**

Disclosed herein is a method for compressing an at least partially transparent digital image (1), comprising the steps of:
- Splitting (S01) the at least partially transparent digital image (1) into two files, a first file (2) comprising red, green and blue, RGB, colour data for each pixel and a second file (4) comprising alpha channel data for each pixel for determining transparency;
- Converting (S02) each of the first file (2) and the second file (4) into Joint Photographic Experts Group, JPEG, format files; and
- Merging (S03) the converted first file and converted the second file into a binary file (6).

## Description

### Technical Field

The invention relates to the field of compressing and delivery of digital images comprising at least partial transparency, via networks, in particular via the world wide web. The general idea of the invention is to provide a technology for compressing, transmitting and loading, thus handling, of image files comprising at least partial transparency, which image files are used for displaying digital content, such as for example images on a website.

### Background of the Invention

Today typically Portable Network Graphics (PNG) formatted images are used for displaying images on websites. PNG is a type of image format that web designers use to create websites because it supports transparent backgrounds and/or semi-transparent images. For compressing the PNG image files a lossless data compression algorithm is used. This data compression algorithm is called DEFLATE. DEFLATE uses a combination of the Lempel-Ziv-Storer-Szymanski (LZSS) lossless data compression algorithm and Huffman Coding. The algorithm that lies behind the DEFLATE method was patented and described in US 5,051,745 B. The problem with such transparent or semi-transparent PNG images is that they are big and therewith heavy, partially due to the fact that the DEFLATE algorithm is a lossless compression, and take a long time to stream from the server to the display of the user. Using the PNG format results in large files, in particular if the image data is complex (e.g photographic images). This also means that there is no way of controlling the quality and file size of the output image when PNG image files are encoded. In other words, it takes a long time to load a website that shows semi-transparent or transparent PNG images. In order to provide transparency in a PNG image, the alpha channel is used. The alpha channel is a color component that represents the degree of transparency (or opacity) of a color (i.e., the red, green and blue channels). It is used to determine how a pixel is rendered when the background color is determined.

Another format that is widely used is the Joint Photography Experts Group (JPEG) image format, in particular the JPEG-2000 format. This JPEG format offers an alternative to the transparent PNG image format but it uses a lossy data compression method that drops unneeded color data, which results in smaller image files. This shortens the loading time of a display image that is streamed from a server, when images are loaded on a website. The downside of this is obviously that the quality of the streamed and loaded image is poorer than the original image and also poorer than a comparable PNG formatted transparent image.

In the field of digital displaying of images there is a contradictory need for high-quality images that are rather small, thus having low weight, to maintain fast loading times for the image itself. A further requirement on the image is that it is not slowing down website performance and that it does not negatively influence user experience.

Herein the term weight describes a file that is comparably big as measured in megabytes. The aim is always to provide an image that is as light as possible but still enables good quality, excellent user experience and optimal website performance.

As mentioned above, JPEG images are advantageous when it comes to size of the image, they offer low weight and therewith small file size. In addition, they can be progressively loaded on websites but they do not offer the possibility of full or partial transparency. JPEG files can further be subject to noise in the form of small rectangular artifacts.

PNG offers higher quality and the possibility to apply transparency and also different levels of transparency. Having the option to use different levels of transparency is very powerful as it allows you to have semi-opaque portions of your image where the background shines or shows through but not completely. This can for instance be useful when advertisement is presented in front of the actual website or at least partially in front of the actual website, similar to a pop-up object. The user might still see parts of the website behind the pop-up. Often PNG files are however heavy, as described above. Due to their heaviness or big size, there are limited options to load them progressively. It is however possible to use interlaced PNG image files. Such interlaced PNG image files can be loaded somewhat progressively. Using interlaced PNG image files has the effect that a part of the image is loaded sharp, which presents the user with the option to decide whether the loading of the image should continue or not once she/he sees what the image is about.

### Summary of the Invention

### Definitions

Herein the following terms are used and their meaning, besides their known ordinary meaning, is herewith briefly explained:

### Image

In this document the word "image" can be a 2D or a 3D image. The term "image" herein includes 2D images and 3D images.

### 3D image

Typically, all graphics are a two-dimensional array of pixels. A 3D graphic is thus a system of producing colors for pixels that convince the user or person in front of the display that the scene she/he is looking at is a 3D image (world) rather than a 2D image. The process of converting a 3D world into a 2D image of that world is called rendering.

### Pixel

A display consists of several pixels, the more pixels are present in a given area (pixel per inch or pixel per centimeter), the better the resolution. A display consists of a plurality of blocks, each of these blocks is a *pixel.* The word "pixel" is derived from the term "Picture Element". Every pixel on a screen has a particular color. A two-dimensional array of pixels is called an image.

### PNG

Portable Network Graphics (PNG) is a raster-graphics file format that supports lossless data compression, as explained above. PNG was developed as an improved, non-patented replacement for Graphics Interchange Format (GIF). PNG supports palette-based image, for example with palettes of 24-bit RGB or 32-bit RGBA colors), grayscale images (with or without alpha channel for transparency), and full-color non-palette-based RGB or RGBA images. RGBA stands hereby for red, green, blue and alpha and RGBA therewith includes transparency.

### JPEG

Joint photographic experts group (JPEG) is a commonly used method of lossy compression for digital images, particularly for those images produced by digital photography. The degree of compression can be adjusted, allowing a selectable tradeoff between storage size and image quality. In general, the higher the compression rate, the lower the quality and the more single pixels are visible. JPEG typically achieves 10:1 compression with little perceptible loss in image quality.

### Progressive loading

It's important to deliver something meaningful to the user as soon as the user opens and therewith starts to load a website. The longer the user must wait for a webpage to load, the bigger the chance that she or he will leave the webpage before it finished loading. The aim is to show the user at least the basic view of the webpage they want to see, with placeholders in the places more content will eventually be loaded. This basic view and placeholder loading is achieved by progressive loading - also known as lazy loading. This is all about deferring loading of as many resources as possible (HTML, CSS, JavaScript), and only loading those immediately that are really needed for the very first user experience. Progressive loading can further include the practice of not loading content until the user scrolls down on the webpage far enough to see it. This practice can save a lot of bandwidth and is especially useful on pages where the call to action (CTA) is right at the top of the page. For determining whether an image is within the field of view of the user, the navigator viewport is used. When referring to JPEG images, progressive loading refers to the method of loading an image right away but only some of the image data is loaded at a time. This means the image will load form the beginning at full size looking pixelated and will become more clear and sharper as it loads.

### Baseline (JPEG)

A Baseline JPEG is an image created using the JPEG compression algorithm that will start to display the image as the data is made available, line by line. In a web browser, you can see JPEG images that are in baseline format when you see it slowly showing up, from the top of the image, to the bottom of it. Contrary to the progressive loading where you see the entire image at once but in the beginning heavily pixelated.

### CDN

CDN stands for content delivery network (CDN) or geographically distributed network of proxy servers and their data centers. The goal is to provide high availability and performance by distributing the service spatially relative to end users. In other words, it is better to load a webpage for a user in Japan from a Server or Proxy Server stationed in Japan than from a server geographically stationed in Canada. CDNs have grown to serve a large portion of the Internet content today, including web objects (text, graphics and scripts), downloadable objects (media files, software, documents), applications (e-commerce, portals), live streaming media, on-demand streaming media, and social media sites. CDNs are a layer in the internet ecosystem. Content owners such as media companies and e-commerce vendors pay CDN operators to deliver their content to their end users. In turn, a CDN pays Internet service providers (ISPs), carriers, and network operators for hosting its servers in their data centers. In general CDN is an umbrella term spanning different types of content delivery services: video streaming, software downloads, web and mobile content acceleration, licensed/managed CDN, transparent caching, and services to measure CDN performance, load balancing, Multi CDN switching and analytics and cloud intelligence. CDN nodes are usually deployed in multiple locations, often over multiple Internet backbones. Benefits of CDN include reducing bandwidth costs, improving page load times, or increasing global availability of content. The number of nodes and servers making up a CDN varies, depending on the architecture, some reaching thousands of nodes with tens of thousands of servers on many remote points of presence (PoPs).

### RGB

RGB stands for the red-green and blue color model, where the colors red, green and blue are added to one another in various combinations to produce a very broad array of colors. Red, green and blue are thereby made use of since they are the basic additive primary colors. The main purpose of the RGB color model is for the sensing, representation, and display of images in electronic systems, such as televisions and computers and in particular in the displaying of images, for example on websites. A pixel in a typical image has three values: red, green and blue, RGB. Usually they range from 0 to 255. A pixel, which has the values 255, 0, 0 is pure red - maximum value for the red component, minimum values for both green and blue.

### Alpha Channel

The alpha channel in an image regulates and controls transparency. In other words one could call it the "transparency map." Contrary to many definitions the alpha channel does not refer to the opacity but rather to the transparency of a pixel. The default for a pixel is in general to be fully opaque, which means that an image without alpha channel will treat all pixels as 100% opaque. When an image has an alpha channel, each pixel comprises four components: red, green blue and alpha. An alpha value of 255 is opaque, while alpha of 0 is transparent. As explained above, the PNG format allows for alpha channel, while JPEG does not. A pixel with the numbers 255, 0, 0, 255 is completely red and not transparent (red value = 255 and alpha value = 255 thus fully opaque). When the alpha value is 0 then the other values basically do not matter because the pixel is 100% transparent. When the alpha value is about 123 then the pixel is half-transparent and the color shades, for instance of a 0, 255, 0 pixel will be a half-transparent green. Other formats such as graphics interchange format (GIF) images can have transparency, but it is either fully transparent or not, each pixel will be completely transparent (and therefore have no color), or completely opaque. Atypical use of alpha channel is to simply have an area of the image be "background", and partially transparent pixels are either right on the edge of the foreground, or are part of a shadow that overlays the background.

### Deflate compression

Deflate is a lossless data compression algorithm that uses a combination of two known compression methods LZSS and Huffman coding. As mentioned above, the algorithm behind the deflate compression is described in US 5,051,745 B.

### Computer Script

A computer script is a list of commands that are executed by a certain program or scripting engine. Scripts may be used to automate processes on a local computer or to generate Web pages on the Web or for loading files, for example image files. For example, DOS scripts and VB Scripts may be used to run processes on Windows machines, while AppleScript scripts can automate tasks on Macintosh computers. Application service provider (ASP), java server pages (JSP), and hyptertext preprocessor (PHP) scripts are often run on Web servers to generate dynamic Web page content, such as for example images.

In view of the previously described technical background, an object of the present invention is to mitigate or remove the above mentioned problems and to provide a method that provides a format that allows transparency and partial transparency while maintaining control of the level of compression of the image and at the same time having a reduced size or weight so that the images can be loaded progressively.

Another object is to provide a method that allows to load digital images on a website quickly and smoothly.

In view of the above-mentioned problems the inventor of the present invention has discovered that it is possible to leverage the JPEG standard. This enables an image to be compressed to a higher degree than PNG, which reduces the size of the file substantially, which again reduces loading times but at the same time supports the alpha channel allowing different degrees of transparency at various positions/pixels in the image. The general idea is thereby to split a transparent PNG image into two files, one file containing the RGB color data (rgb.jpg) and the other the alpha channel (apha.jpg) and therewith the transparency map.

Disclosed herein is a method for compressing, storing and supplying, thus handling, an at least partially transparent digital image, comprising the steps of:
- splitting the at least partially transparent digital image into two files, a first file comprising red, green and blue, RGB, colour data for each pixel and a second file comprising alpha channel data for each pixel for determining transparency;
- converting each of the first file and the second file into Joint Photographic Experts Group, JPEG, format files; and
- merging the converted first file and converted the second file into a binary file.

By leveraging the JPEG standard it is possible to compress the image file into a binary file and at the same time keep the transparency as in the original image file.

The binary file may comprise information about binary boundaries of the RGB data and the alpha channel data.

The information may be embedded in a header of the binary file.

The header or information may be automatically present when the first converted file and the second converted file are merged. Alternatively, the header may be generated upon merging of the converted first file and the converted second file. The header contains relevant information needed to parse and read the binary file such as image width and height. It further comprises information, if the image data is progressively encoded, about where in the file each "iteration" or "layer" (boundaries and transparency information) of data is located.

The first converted file may be a progressive or baseline JPEG file.

The second converted file may be a progressive or baseline JPEG file.

Using progressive file types allow to load images progressively when they are streamed from a server onto a website for instance.

The at least partially transparent image file may be an at least partially transparent portable network graphics, PNG, file.

Using the described method on a PNG file has the advantage that a high quality of the transparent or partially transparent image can be maintained but at a reduced weight/file size.

The method may further comprise the step of uploading the binary file to a server.

The server may be a physical server, a server based in the cloud or a virtual server.

In an embodiment the server may be part of a content delivery network, CDN.

CDN is widely used for streaming website content in order to provide geographical availability and faster loading times.

The method may further comprise the step of streaming the binary file from the server using a computer script for loading the binary file.

The method may further comprise the step of loading the binary file progressively or baseline-style by continuously merging the RGB data of each pixel with the alpha data of each pixel using the computer script. The computer script is also configured to pause and resume the downloading or loading of the image if the user scrolls the image out of the viewport/navigator viewport, even if this is done only temporarily.

Using a progressive merging and loading provides the user with a vague image from the beginning and the waiting is reduced when loading a website.

Disclosed herein is also a storage medium comprising computer memory for executing a computer program product according to any of the above described steps and features.

Disclosed herein is further a computing device for compressing, storing and supplying, thus handling, an at least partially transparent digital image, the computing device being configured to:
- split the at least partially transparent digital image into two files, a first file comprising red, green and blue, RGB, colour data for each pixel and a second file comprising alpha channel data for each pixel for determining transparency;
- convert each of the first file and the second file into Joint Photographic Experts Group, JPEG, format files; and
- merge the converted first file and converted the second file into a binary file.

The computing device may further be configured to upload the binary file to a server.

The computing device may further be configured to stream the binary file from the server using a computer script for loading the binary file.

The computing device may further be configured to load the binary file progressively or baseline-style by continuously merging the RGB data of each pixel with the alpha data of each pixel using the computer script.

The invention is now described via an embodiment. This embodiment is however exemplary and therewith not limiting in any way to the scope of the invention. The purpose of the embodiment is merely to show a possible use of the invention in context.

### Brief Description of the Drawings

The present invention will now be described, for exemplary purposes, in more detail by way of an embodiment(s) and with reference to the enclosed drawings, in which:
- Fig. 1: schematically illustrates the process of compressing a partially transparent image file using the method according to the invention;
- Fig. 2: schematically illustrates a method according to the invention; and
- Fig. 3: schematically illustrates a computing device that can be used to perform the steps according to the method of the invention.

### Detailed Description

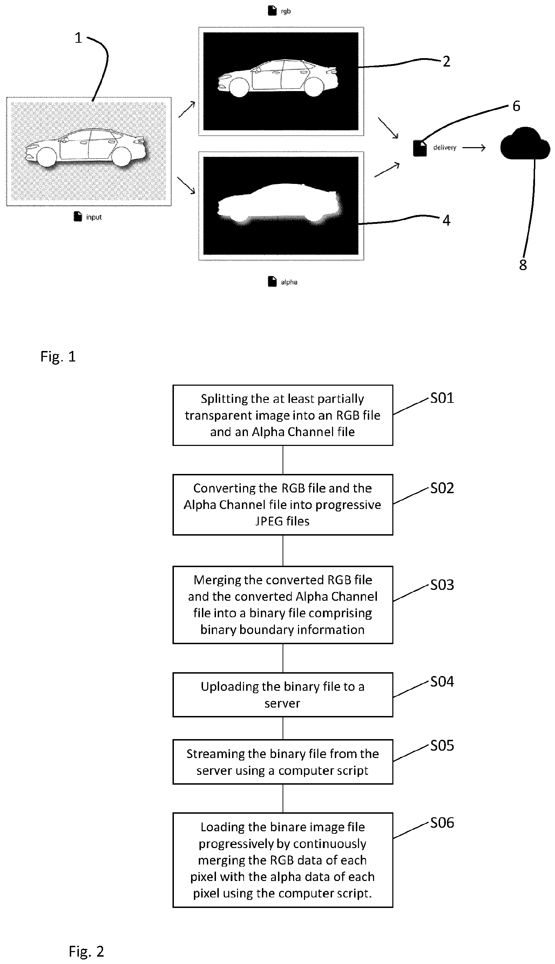

Figures 1 and Figure 2 schematically illustrate the steps of splitting S01 an at least partially transparent image file 1, preferably a PNG file, into a first file 2 and a second file 4. The first file 2 comprises the red, green and blue colour data, for example in the form of values between 0 to 255. The different colour values may be presented in the shape of (255, 0, 0) for completely red, or (0, 255, 0) for completely green or (0, 0, 255) for completely blue or anything there in between. The first file 2 in figure 1 comprises colour data and for illustrative purposes the car could be shown in blue (or red or green or anything in between for the matter). Since the background behind the car does not have any color it is shown in black, which means the alpha channel regulates the effect of this background area. The surface close to the car at the bottom and the back of it is shown is shown in greyscale in the at least partially transparent image file 1, since it is not fully transparent as it indicates the shade of the car versus the background when light is shone onto the car from the left top corner of the at least partially transparent image file 1. The second file 4 comprises the alpha channel value, also between 0 to 255, whereby 0 is black and 255 is white. 0 and therewith black represent the transparent area (100% transparent) as shown in figure 1 with the black area around the car. 255 represents the white area and therewith the none-transparent area as for instance illustrated by the car in the second file 4 in figure 1. Everything in between is a grey zone, which can be seen in the second image file 4 by the grey to light grey area at the bottom and at the back of the car, which grey to light grey area stands for the shade of the car versus the background. This described grey to light grey area is therefore only partially transparent, with an alpha channel value somewhere in between 1 and 254, preferably between 50 to 200.

According to figures 1 and 2 the first file 2 and the second file 4 are then converted S02 into Joint Photographic Experts Group, JPEG, or progressive JPEG files. Once first file and the second file are then converted S02 they are merged S03 into one binary file 6 comprising information about the boundaries of the RGB colour data, which controls colour data and the alpha channel data that controls transparency. The information regarding the boundaries can be embedded in a header of the binary file and this header is generated and it is automatically embedded when the converted first file 2 and the converted second file 4 are merged S03. Once the binary file is created it can be uploaded S04 to a server 8. The server 8 may be a cloud server as indicated in figure 1 but it may also be a virtual server, a cloud server, a physical server or any combination thereof. Once the binary file 6 is uploaded to a server 8 it can then be accessed and streamed S05 to a website or the like. As previously mentioned, the server 8 may be part of content delivery network, CDN, for optimal availability and streaming performance.

Once the website starts to stream S05 the binary file 6, it is then progressively loaded S06 by continuously merging the RGB data of each pixel with the alpha data of each pixel using the computer script. As mentioned previously progressive loading includes loading small placeholders for the image, which are shown immediately and then the rest of the image, preferably within the navigator viewport (displayed part of the website), is loaded to the final image.

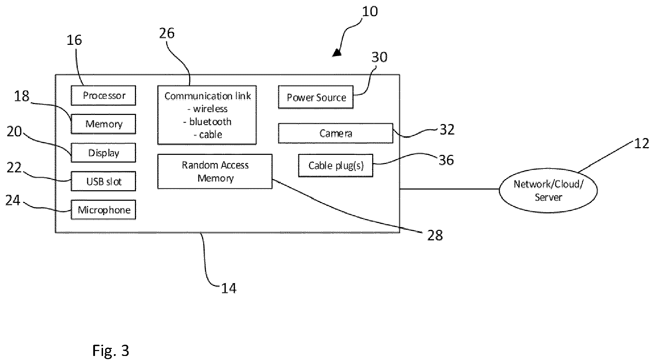

Figure 3 schematically illustrates a computing device 10 that is connected to a network/server 12, which network 12 can be the world wide web. The computing device 10 includes some type casing 14. In the casing 14, the computing device 12 comprises a processor 16, a memory 18, a wireless, bluetooth or wired communication link 26, random access memory, RAM, 28, some sort of a power source 30 and some sort of a display 20. The computing device 12 may further and optionally comprise a USB port 22, a microphone 24, a camera 32 and other cable plug(s) 34. The various parts within the casing 14 are electronically interconnected with one another.

The computing device 10 is able to compress an at least partially transparent digital image, by:
- splitting S01 the at least partially transparent digital image 1 into two files, a first file 2 comprising red, green and blue, RGB, colour data for each pixel and a second file 4 comprising alpha channel data for each pixel for determining transparency;
- converting S02 each of the first file 2 and the second file 4 into Joint Photographic Experts Group, JPEG, format files; and
- merging S03 the converted first file and converted the second file into a binary file 6.

The computing device 10 can then upload S04 the binary file 6 to a server 8. From there another computing device or the same computing device 10 can then access the binary file 6 and stream S05 the binary file using a computer script. The binary file 6 may for instance be loaded in a website on the computing device 10.

When the binary file 6 is loaded S06, once a website containing the binary file 6 is accessed, then the binary file is progressively loaded S06 by continuously merging the RGB data of each pixel with the alpha data of each pixel using the computer script.

The main application of the invention, at this point in time is for streaming of images on websites. The invention may however be used in other circumstances. Compressing transparent or partially transparent PNG files in an efficient manner may also be beneficial for electronic photo-storage providers, electronic archive providers and electronic databases for reducing size and keeping processing power at a reasonable level.

## Claims

1. A method for handling an at least partially transparent digital image (1), comprising the steps of:
- Splitting (S01) the at least partially transparent digital image (1) into two files, a first file (2) comprising red, green and blue, RGB, colour data for each pixel and a second file (4) comprising alpha channel data for each pixel for determining transparency;
- Converting (S02) each of the first file (2) and the second file (4) into Joint Photographic Experts Group, JPEG, format files; and
- Merging (S03) the converted first file and converted the second file into a binary file (6).

2. The method according to claim 1, further wherein the binary file (6) comprises information about binary boundaries of the RGB data and the alpha channel data.

3. The method according to claim 2, wherein the information is embedded in a header of the binary file.

4. The method according to any of claims 1 to 3, wherein the converted first file is a progressive or baseline JPEG file.

5. The method according to any of the preceding claims, wherein the converted second file is a progressive or baseline JPEG file.

6. The method according to any of the preceding claims, wherein the at least partially transparent image file is a portable network graphics, PNG, file.

7. The method according to any of the preceding claims, further comprising the step of uploading (S04) the binary file to a server (8).

8. The method according to claim 7, wherein the server (8) is part of a content delivery network, CDN.

9. The method according to claim 7 or 8, further comprising the step of streaming (S05) the binary file (6) from the server (8) using a computer script for loading the binary file.

10. The method according to claim 9, comprising the step of loading (S06) the binary file progressively by continuously merging the RGB data of each pixel with the alpha data of each pixel using the computer script.

11. A storage medium comprising computer memory for executing a computer program product according to any of the previous claims 1 to 10.

12. A computing device (10) for handling an at least partially transparent digital image (1), the computing device being configured to:
- split (S01) the at least partially transparent digital image (1) into two files, a first file (2) comprising red, green and blue, RGB, colour data for each pixel and a second file (4) comprising alpha channel data for each pixel for determining transparency;
- convert (S02) each of the first file and the second file into Joint Photographic Experts Group, JPEG, format files; and
- merge (S03) the converted first file and converted the second file into a binary file (6).

13. The computing device according to claim 12, further being configured to upload (S04) the binary file (6) to a server (8).

14. The computing device according to claim 13, further being configured to stream (S05) the binary file (6) from the server (8) using a computer script for loading the binary file.

15. The computing device according to claim 14, further being configured to load (S06) the binary file (6) progressively by continuously merging the RGB data of each pixel with the alpha data of each pixel using the computer script.

## Amended claims

### Amended claims in accordance with Rule 137(2) EPC.

1. A method for handling an at least partially transparent digital image (1), comprising the steps of:
- Splitting (S01) the at least partially transparent digital image (1) into two files, a first file (2) comprising red, green and blue, RGB, colour data for each pixel and a second file (4) comprising alpha channel data for each pixel for determining transparency;
- Extracting and Converting (S02) each of the first file (2) and the second file (4) into Joint Photographic Experts Group, JPEG, format files; and
- Storing (S03) the converted first file and converted second file in a binary file (6) comprising a header, which comprises information for parsing and reading the binary file.

2. The method according to claim 1, further wherein the binary file (6) comprises information about binary boundaries of the RGB data and the alpha channel data.

3. The method according to claim 2, wherein the information is embedded in the header of the binary file.

4. The method according to any of claims 1 to 3, wherein the converted first file is a progressive or baseline JPEG file.

5. The method according to any of the preceding claims, wherein the converted second file is a progressive or baseline JPEG file.

6. The method according to any of the preceding claims, wherein the at least partially transparent image file is a portable network graphics, PNG, file.

7. The method according to any of the preceding claims, further comprising the step of uploading (S04) the binary file to a server (8).

8. The method according to claim 7, wherein the server (8) is part of a content delivery network, CDN.

9. The method according to claim 7 or 8, further comprising the step of streaming (S05) the binary file (6) from the server (8) using a computer script for loading the binary file.

10. The method according to claim 9, comprising the step of loading (S06) the binary file progressively by continuously merging the RGB data of each pixel with the alpha data of each pixel using the computer script.

11. A storage medium configured to execute a computer program that performs any of the steps according to claims 1 to 10.

12. A computing device (10) for handling an at least partially transparent digital image (1), the computing device being configured to:
- split (S01) the at least partially transparent digital image (1) into two files, a first file (2) comprising red, green and blue, RGB, colour data for each pixel and a second file (4) comprising alpha channel data for each pixel for determining transparency;
- convert (S02) each of the first file and the second file into Joint Photographic Experts Group, JPEG, format files; and
- store (S03) the converted first file containing the RGB data for each pixel and the converted second file containing the alpha channel data for each pixel into a binary file (6) comprising a header, which comprises information for parsing and reading the binary file.

13. The computing device according to claim 12, further being configured to upload (S04) the binary file (6) to a server (8).

14. The computing device according to claim 13, further being configured to stream (S05) the binary file (6) from the server (8) using a computer script for loading the binary file.

15. The computing device according to claim 14, further being configured to load (S06) the binary file (6) progressively by continuously merging the RGB data of each pixel with the alpha data of each pixel using the computer script.
